Europäisches Patentamt

European Patent Office

Office européen des brevets

(11) Veröffentlichungsnummer: **0 517 085 A1**

# EUROPÄISCHE PATENTANMELDUNG

(21) Anmeldenummer: **92108917.3**

(22) Anmeldetag: **27.05.92**

(51) Int. Cl.5: **B23Q 3/155**

(30) Priorität: **30.05.91 DE 4117701**

(43) Veröffentlichungstag der Anmeldung:
**09.12.92 Patentblatt 92/50**

(84) Benannte Vertragsstaaten:
**CH DE ES FR GB IT LI**

(71) Anmelder: **CHIRON-WERKE GMBH & CO. KG**
**Talstrasse 23**
**W-7200 Tuttlingen(DE)**

(72) Erfinder: **Rütschle, Eugen**
**Schönenbergstrasse 20**
**W-7202 Mühlheim/Donau(DE)**
Erfinder: **Winkler, Hans-Henning**
**Regerstrasse 3**
**W-7200 Tuttlingen(DE)**

(74) Vertreter: **Witte, Alexander, Dr.-Ing. et al**
**Augustenstrasse 7**
**W-7000 Stuttgart 1(DE)**

(54) **Verfahren zum Wechseln von Werkzeugen an einer Werkzeugmaschine.**

(57) Ein Verfahren dient zum Wechseln von Werkzeugen (15) in einer Aufnahme (13) einer Spindel (12) einer Werkzeugmaschine (10). Ein Greifer (20) eines Werkzeugwechslers (21) erfaßt ein aus der Aufnahme (13) zu entnehmendes Werkzeug (15) vor dem Ausstoßen aus der Aufnahme (13). Ein Antriebsmotor (17) der Spindel (12) wird dabei abgebremst. Das Werkzeug (15) wird in den Greifer (20) ausgestoßen, bevor der Antriebsmotor (17) der Spindel (12) zum Stillstand abgebremst wurde.

Fig. 1

Die Erfindung betrifft ein Verfahren zum Wechseln von Werkzeugen in einer Aufnahme einer Spindel einer Werkzeugmaschine, bei dem ein Greifer eines Werkzeugwechslers ein aus der Aufnahme zu entnehmendes Werkzeug vor dem Ausstoßen aus der Aufnahme erfaßt und ein Antriebsmotor der Spindel abgebremst wird.

Aus der DE-PS 32 33 934 ist eine Werkzeugmaschine mit Werkzeugmagazin bekannt, mit der das vorstehend genannte Verfahren ausgeführt werden kann.

Die aus der DE-PS 32 33 934 bekannte Werkzeugmaschine arbeitet wie folgt:
Die bekannte Werkzeugmaschine ist mit einem vertikalachsigen Spindelstock versehen, an dessen Unterseite sich eine ebenfalls vertikalachsige Aufnahme für Werkzeuge befindet. Um den Spindelstock herum ist eine Mehrzahl von Werkzeugwechslern angeordnet. Die Werkzeugwechsler umfassen jeweils ein Gestänge, das mittels einer pneumatischen Kolben-Zylinder-Einheit betätigbar ist. Am unteren Ende des Gestänges befindet sich ein Greifer, in dem einzelne Werkzeuge bzw. Werkzeughalter permanent gehalten sind. Hierzu sind die Greifer mit einem Drehlager ausgebildet, so daß die Werkzeuge sich in dem Greifer drehen können und die Greifer demzufolge auch am Werkzeug verbleiben können, wenn sich das Werkzeug in der rotierenden Spindel der Werkzeugmaschine befindet.

Die Werkzeugwechsler der bekannten Werkzeugmaschine arbeiten im Gegentaktbetrieb. Dies bedeutet, daß wahrend eines bestimmten Bearbeitungsvorganges einer der Werkzeugwechsler mit seinem Greifer ein bestimmtes Werkzeug in der Aufnahme der Spindel hälte, während sich die Spindel dreht und das Werkzeug einen bestimmten Bearbeitungsschritt am Werkstück ausführt. Sobald dieser Bearbeitungsschritt abgeschlossen ist, wird der Antriebsmotor der Spindel zum Stillstand abgebremst. Sobald das Werkzeug stillsteht, wird es mittels einer geeigneten Vorrichtung aus der Aufnahme ausgestoßen und kann nun durch relatives Verfahren von Spindelstock und Werkzeugwechslern in vertikaler Richtung zueinander nach unten aus der Aufnahme der Spindel ausgefahren werden.

Durch Betätigung der pneumatischen Kolben-Zylinder-Einheit des zugehörigen Werkzeugwechslers wird nun das Werkzeug zunächst radial nach außen und dann in vertikaler Richtung nach oben befördert, um schließlich in eine nach oben von der Spindelaufnahme beabstandete Magazinstellung zu gelangen.

Sobald der genannte Werkzeugwechsler die obere Endstellung erreicht hat, wird ein Endlagensensor betätigt. Die Betätigung des Endlagensensors bewirkt, daß ein zweiter Werkzeugwechsler einen gegenläufigen Bewegungsablauf beginnt, indem ein neues Werkzeug aus einer oberen Magazinstellung zunächst nach unten und dann in radialer Richtung zur Spindelachse hin und schließlich nach oben in die Aufnahme der Spindel hineinbefördert wird. Sobald das neue Werkzeug in die Aufnahme der Spindel eingesetzt und dort hineingezogen wurde, wird der Spindelmotor wieder eingeschaltet, und es kann ein nächster Bearbeitungsschritt beginnen.

Bei pneumatischen Kolben-Zylinder-Einheiten ist es wie bei vielen anderen Bewegungseinheiten erforderlich, daß infolge der gewünschten hohen Verfahrgeschwindigkeit eine Endlagendämpfung vorgesehen wird. Hierunter versteht man, daß die bewegten Elemente kurz vor Erreichen der Endstellung abgebremst werden, damit eine mechanische Überlastung bei Erreichen der Endstellung verhindert wird. Diese Endlagendämpfung betrifft zwar nur einen geringen Teil des räumlichen Bewegungsablaufes, kann jedoch je nach Einzelfall einen beträchtlichen Anteil des gesamten zeitlichen Ablaufes ausmachen.

Der Erfindung liegt die Aufgabe zugrunde, ein Verfahren der eingangs genannten Art dahingehend weiterzubilden, daß die Werkzeugwechselzeiten weiter vermindert werden.

Diese Aufgabe wird erfindungsgemäß dadurch gelöst, daß das Werkzeug in den Greifer ausgestoßen wird, bevor der Antriebsmotor der Spindel zum Stillstand abgebremst wurde.

Die der Erfindung zugrundeliegende Aufgabe wird auf diese Weise vollkommen gelöst.

Wenn nämlich das Werkzeug bereits in den Greifer ausgestoßen wird, während der Antriebsmotor noch mit relativ niedriger Drehzahl ausläuft, so wird die Zeit gespart, die ansonsten erforderlich wäre, um den Antriebsmotor der Spindel noch bis zum Stillstand abzubremsen. Da man bei modernen Werkzeugmaschinen von Werkzeugwechselzeiten im Sekundenbereich spricht, sind auf diese Weise bereits Sekundenbruchteile ein entscheidender Faktor, weil sich bei komplexen Bearbeitungsvorgängen in Bearbeitungszentren die Werkzeugwechselzeiten erheblich summieren und damit für die Gesamt-Bearbeitungszeit zu Buche schlagen können.

Bei einem praktischen Ausführungsbeispiel der Erfindung wird das Werkzeug bei einer Drehzahl von 100 bis 700 $\text{min}^{-1}$, vorzugsweise bei 500 $\text{min}^{-1}$ der Spindel ausgestoßen.

Diese Zahlen haben sich in der Praxis bewährt und können z.B. bei Werkzeugmaschinen der eingangs genannten Art vorgesehen werden, bei denen die Greifer permanent am Werkzeug verbleiben.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1 eine äußerst schematisierte Seitenansicht eines Spindelstocks einer erfindungsgemäßen Werkzeugmaschine, wie er zur Durchführung des erfindungsgemäßen Verfahrens geeignet ist;

Fig. 2 eine Darstellung, ähnlich Fig. 1, jedoch für eine weitere Phase des Bewegungsablaufs beim Werkzeugwechsel;

Fig. 3 eine weitere Darstellung, ähnlich den Fig. 1 und 2, für noch eine weitere Phase des Bewegungsablaufs beim Werkzeugwechsel.

In den Figuren bezeichnet 10 insgesamt eine Werkzeugmaschine, vorzugsweise ein vertikalachsiges Bearbeitungszentrum, mit dem beispielsweise Bohr- und Fräsarbeiten unter numerischer Steuerung durchgeführt werden können.

Einzelheiten der in den Figuren dargestellten Werkzeugmaschine 10 können der eingangs genannten DE-PS 32 33 934 entnommen werden, deren Offenbarungsgehalt durch diese Bezugnahme ausdrücklich zum Offenbarungsgehalt auch der vorliegenden Anmeldung gemacht wird.

Die Werkzeugmaschine 10 hat einen vertikalachsigen Spindelstock 11 mit einer Spindel 12, die nach unten in eine Aufnahme 13 übergeht.

Mit 14 ist im Bereich der Aufnahme 13 äußerst schematisch eine Ausstoßvorrichtung angedeutet, mit der ein Werkzeug 15 aus der Aufnahme 13 ausgestoßen werden kann.

In den Figuren ist die jeweils linke und die jeweils rechte Hälfte zu beiden Seiten des Spindelstocks 11 mit an sich baugleichen Elementen versehen, die jeweils mit denselben Bezugszeichen bezeichnet sind und nur durch ein hinzugefügtes "a" bzw. "b" voneinander unterschieden werden.

Eine Antriebsverbindung 16 führt von der drehbaren Aufnahme 13 zu einem Antriebsmotor 17 der Spindel 12. Mit 18 ist eine Steuerleitung angedeutet, vermittels derer der Antriebsmotor 17 ein- und ausgeschaltet bzw. in seiner Drehzahl geregelt werden kann, wie dies an sich bekannt ist.

Um den Spindelstock 11 herum ist eine Mehrzahl von Werkzeugwechslern angedeutet, von denen in den Figuren jeweils nur zwei dargestellt sind.

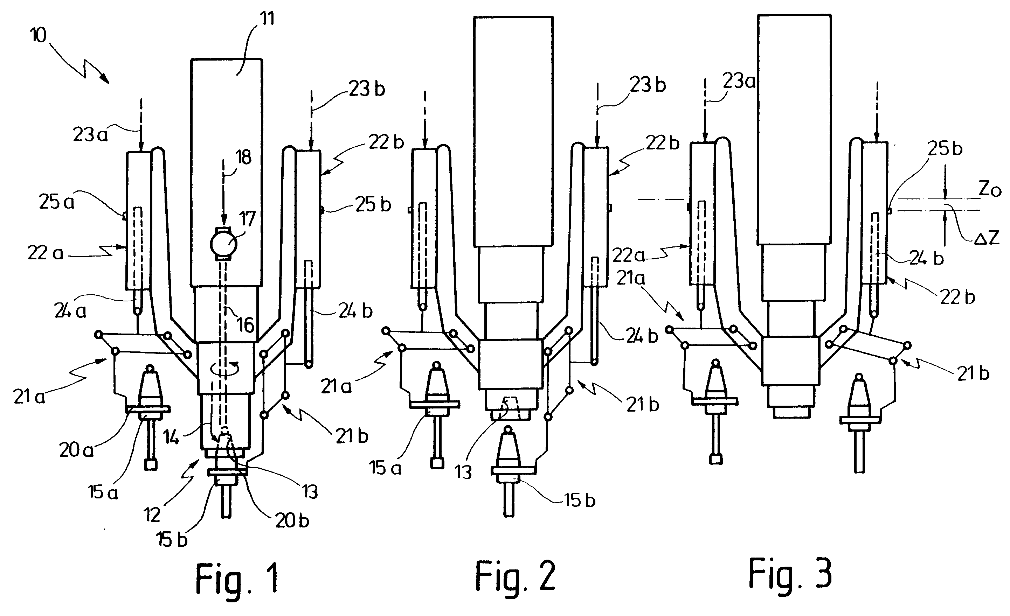

Greifer 20a, 20b dienen zum Halten der Werkzeuge 15a, 15b in einer Weise, daß sich die Werkzeuge 15a, 15b in den Greifern 20a, 20b zu drehen vermögen. Die Greifer 20a, 20b können somit an den Werkzeugen 15a, 15b verbleiben, während sich diese in der Aufnahme 13 der Spindel 12 befinden und rotieren. Dies ist in Fig. 1 mit dem Greifer 20b angedeutet, der das Werkzeug 15b in der Aufnahme 13 hält, in die das Werkzeug 15b eingezogen ist.

Die Greifer 20a, 20b sind das jeweils unterste Glied eines Werkzeugwechslers 21a, 21b. Die Werkzeugwechsler 21a, 21b werden über ein in den Figuren nur schematisch dargestelltes Parallelogramm-Gestänge betätigt, und zwar mittels pneumatischen Kolben-Zylinder-Einheiten 22a, 22b, die wiederum über Steuerleitungen 23a, 23b betätigbar sind. Mit 24a, 24b sind die entsprechenden Kolben angedeutet. Die Kolben 24a, 24b stehen dabei beispielhaft für die bewegten Teile der Werkzeugwechsler 21a, 21b. Die Kolben 24a, 24b arbeiten mit in den Figuren nicht dargestellten Endlagensensoren zusammen, um die jeweils untere bzw. obere Endlage der Werkzeugwechsler 21a, 21b feststellen zu können. Mit 25a, 25b sind jeweils dritte Sensoren bezeichnet, auf deren Funktion weiter unten noch eingegangen wird.

Die Werkzeugmaschine 10 arbeitet wie folgt:

In Fig. 1 ist die Ausgangssituation dargestellt, in der das Werkzeug 15b sich in der Aufnahme 13 der Spindel 20 befindet und dort gedreht wird, um ein nicht dargestelltes Werkstück zu bearbeiten. Der zugehörige Werkzeugwechsler 21b befindet sich dabei in seiner nach unten ausgefahrenen Stellung. Demgegenüber ist der in Fig. 1 linke Werkzeugwechsler 21a in seiner oberen Endstellung, in der das Werkzeug 15a seine Magazinstellung einnimmt.

Es wurde bereits erwähnt, daß der Greifer 20b des Werkzeugwechslers 21b so beschaffen ist, daß er an dem in der Aufnahme 13 rotierenden Werkzeug 15b verbleibt.

In der in Fig. 1 dargestellten eingezogenen Stellung befindet sich das Werkzeug 15b mit seinem genormten Kegel in einer eingezogenen Stellung innerhalb der Aufnahme 13.

Wenn nun der Bearbeitungsvorgang am Werkstück abgeschlossen ist und das Werkzeug 15b ausgewechselt werden soll, so wird über die Steuerleitung 18 ein Abschaltsignal an den Antriebsmotor 17 gegeben.

Die Drehzahl des Antriebsmotors 17 wird dabei überwacht, indem entweder diese Drehzahl unmittelbar gemessen oder eine Zeit definiert wird, innerhalb der der Antriebsmotor 17 bei frei drehbarem Werkzeug 15b normalerweise zum Stillstand abgebremst wird.

Unabhängig davon, wie die Drehzahlüberwachung des Antriebsmotors 17 nun im einzelnen vorgenommen wird, geht ein Steuersignal an die Ausstoßvorrichtung 14, bevor der Antriebsmotor 17 zum Stillstand abgebremst wurde. Vorzugsweise geschieht dies bei einer Drehzahl im Bereich von 100 bis 700 min$^{-1}$, insbesondere bei einer Drehzahl von 500 min$^{-1}$.

Während das Werkzeug 15b sich somit noch mit dieser Auslaufdrehzahl dreht, wird es bereits durch Betätigung der Ausstoßvorrichtung 14 aus der Aufnahme 13 nach unten ausgestoßen. Der Greifer 20b des Werkzeugwechslers 21b muß somit das sich noch drehende und auslaufende Werkzeug 15b auffangen, was jedoch ohne weiteres möglich ist, da das Werkzeug 15b mittels einer Drehhalterung im Greifer 20b gehalten wird.

Wie aus Fig. 2 zu entnehmen ist, werden nun die in vertikaler Richtung starr miteinander verbundenen Werkzeugwechsler 21a, 21b in an sich bekannter Weise gemeinsam nach unten verfahren, bis das Werkzeug 15b vollkommen nach unten aus der Aufnahme 13 herausgelangt ist. Das neue Werkzeug 15a wird auf diese Weise gleichzeitig geringfügig nach unten in den Bereich der Aufnahme 13 heranbewegt.

Durch Betätigen der Steuerleitung 23b wird nun die Kolben-Zylinder-Einheit 22b des Werkzeugwechslers 21b betätigt, mit der Folge, daß der Kolben 24b bzw. die Kolbenstange nach oben eingezogen werden. Durch das Parallelogramm-Gestänge wird gleichzeitig in an sich bekannter Weise erreicht, daß das Werkzeug 15b zunächst radial nach rechts von der Achse der Spindel 20 weg nach rechts geschwenkt und dann anschließend nach oben eingezogen wird.

Fig. 3 zeigt die nächste Phase des Bewegungsvorganges, in dem der Werkzeugwechsler 21b nahezu die obere Endstellung erreicht hat, die in Fig. 3 mit $z_0$ bezeichnet ist. Der räumliche Abstand, den das obere Ende der Kolbenstange 24b noch von der Endstellung $z_0$ hat, ist in Fig. 3 mit $\Delta z$ bezeichnet. Bei Erreichen dieses Abstandes $\Delta z$ von der Endstellung $z_0$ wird der Sensor 25b angesteuert, der in Zusammenwirkung mit der Kolbenstange 24b oder einem anderen bewegten Element des Werkzeugwechslers 21b entsprechend positioniert wurde.

Wenn der Sensor 25b anspricht, wird synchron ein Steuerbefehl auf die Steuerleitung 23a gegeben, um die linke Kolben-Zylinder-Einheit 22a des Werkzeugwechslers 21a in Betrieb zu setzen.

Dies hat zur Folge, daß die Endlagendämpfung der Kolben-Zylinder-Einheit 22b, die auf der Reststrecke $\Delta z$ wirksam wird, ablaufen kann, während sich andererseits der linke Werkzeugwechsler 21a bereits in Aktion befindet.

Bei einem praktischen Ausführungsbeispiel liegt die Länge der Kolben-Zylinder-Einheit in der Größenordnung von 1 m; die Reststrecke $\Delta z$ beträgt beispielsweise zwischen 5 und 10 mm.

Durch die beiden vorstehend ausführlich erläuterten Maßnahmen, nämlich zum einen das Ausstoßen des Werkzeugs aus der Spindelaufnahme vor Erreichen des Stillstandes des Antriebsmotors und zum anderen das Starten des jeweils neuen Werkzeugwechslers vor Erreichen der Endstellung des alten Werkzeugwechslers bringt eine erhebliche Verkürzung der Werkzeugwechselzeiten mit sich.

## Patentansprüche

1. Verfahren zum Wechseln von Werkzeugen (15) in einer Aufnahme (13) einer Spindel (12) einer Werkzeugmaschine (10), bei dem ein Greifer (20) eines Werkzeugwechslers (21) ein aus der Aufnahme (13) zu entnehmendes Werkzeug (15) vor dem Ausstoßen aus der Aufnahme (13) erfaßt und ein Antriebsmotor (17) der Spindel (12) abgebremst wird, dadurch gekennzeichet, daß das Werkzeug (15) in den Griefer (20) ausgestoßen wird, bevor der Antriebsmotor (17) der Spindel (12) zum Stillstand abgebremst wurde.

2. Verfahren nach Anspruch 1, dadurch gekennzeichnet, daß das Werkzeug (15) bei einer Drehzahl von 100 bis 700 min$^{-1}$, vorzugsweise bei 500 min$^{-1}$ der Spindel (12) ausgestoßen wird.

Fig. 1  Fig. 2  Fig. 3

**Europäisches Patentamt**

# EUROPÄISCHER RECHERCHENBERICHT

Nummer der Anmeldung

EP 92 10 8917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN<br>vol. 13, no. 573 (M-909)(3921) 19. Dezember 1989<br>& JP-A-1 240 245 ( OSAKA KIKO ) 25. September 1989<br>* Zusammenfassung *<br>--- | 1,2 | B23Q3/155 |
| X | DE-A-3 727 525 (VEB WERKZEUGMASCHINENKOMBINAT FRITZ HECKERT)<br>* das ganze Dokument *<br>--- | 1,2 | |
| X | FR-A-2 496 532 (TOYODA)<br>* Seite 10, Zeile 30 - Seite 11, Zeile 22 *<br>--- | 1,2 | |
| X | EP-A-0 044 886 (TOYODA)<br>* Seite 25, Absatz 1; Anspruch 1 *<br>--- | 1,2 | |
| A | EP-A-0 249 898 (CHIRON)<br>--- | | |
| A | PATENT ABSTRACTS OF JAPAN<br>vol. 8, no. 197 (M-324)(1634) 11. September 1984<br>& JP-A-59 088 236 ( ENSHIYUU SEISAKU ) 22. Mai 1984<br>* Zusammenfassung *<br>----- | | RECHERCHIERTE SACHGEBIETE (Int. Cl.5)<br><br>B23Q |

Der vorliegende Recherchenbericht wurde für alle Patentansprüche erstellt

| Recherchenort | Abschlußdatum der Recherche | Prüfer |
|---|---|---|
| DEN HAAG | 07 SEPTEMBER 1992 | KORTH C-F.F.A. |